# EUROPEAN PATENT APPLICATION

(11) **EP 3 648 241 A1**
(43) Date of publication of application: **06.05.2020**
(21) Application number: 18823089.0
(22) Date of filing: 27.06.2018
(51) Int. Cl.: H01M 10/613

(54) **THERMALLY CONDUCTIVE LITHIUM ION BATTERY**

(30) Priority: 28.06.2017 CN 201710503671; 28.06.2017 CN 201710503605
(71) Applicant: Changsha Junengchong New Energy Co., Ltd, Changsha, Hunan 410205 (CN)
(72) Inventor: QIU, Boqian, Changsha Hunan 410205 (CN)
(74) Representative: Zaboliene, Reda
(86) International application number: PCT/CN2018/093107
(87) International publication number: WO 2019/001469

(57) **Abstract**

A heat conducting lithium-ion battery includes a battery cell including positive and negative electrode plates. The positive electrode plate includes a positive current collector and a positive active material layer coated on the positive current collector. The negative electrode plate includes a negative current collector and a negative active material layer coated on the negative current collector. At least one of the positive and negative electrode plates includes a heat conducting and collecting body which is a portion of the current collector not coated by the active material layer. At least two heat conducting and collecting bodies are stacked together to form at least one heat converging path, which allows heat energy to enter or exit from the battery cell. A fluid-containing pipe is connected to the at least one heat converging path.

## Description

### FIELD

The subject matter herein generally relates to lithium-ion batteries, and more particularly, to a heat conducting lithium-ion battery.

### BACKGROUND

Traffic on the roads brings pressure on the energy crisis and environmental pollution, thus it is urgent to develop and research efficient, clean and safe new energy vehicles to achieve energy conservation and emission reduction. Lithium-ion batteries have become the best candidates for power systems of the new energy vehicles because of high specific energy, no pollution, and no memory effect. However, the lithium-ion batteries are very sensitive to temperature, and efficient discharge and good performance of the battery pack can be only obtained within a suitable temperature range. At an elevated temperature may cause the lithium-ion battery to age faster and increase its thermal resistances faster. The cycle time becomes less, the service life becomes shorter, and even thermal runaway problems can occur at an elevated operating temperature. However, operating at too low a temperature may lower the conductivity of the electrolyte 40 and the ability to conduct active ions, resulting an increase of the impedance, and a decrease in the capacity of the lithium-ion batteries.

Conventionally, the position of the cell is changed to improve the fluid flow path and increase the heat dissipation. The battery casing may also be improved by replacing the aluminum alloy shell material with the composite of thermoelectric material and aluminum, and by adding a plurality of heat dissipating ribs to the side of the housing. The electrode plate may also be extended into the electrolyte 40 to transmit heat energy to the battery casing through the electrolyte 40 and then to the outside of the battery. Although some heat is dissipated, heat dissipation efficiency is still poor since the heat cannot be directly discharged from main heat generating component, the electrode plates, to the outside of the battery. Therefore, a new lithium-ion battery is needed.

### SUMMARY OF THE INVENTION

In order to solve the problem existing in the prior art, the present disclosure provides a lithium-ion power battery which can effectively solve the problem of excessive or low battery temperature.

A heat conducting lithium-ion battery comprises a casing, a battery cell, a positive electrode tab, and a negative electrode tab. The positive tab and the negative tab can be arranged on a same side or different sides of the battery cell. The casing encloses the battery cell. The battery cell comprises a positive electrode plate, a negative electrode plate, and a separator spaced between the positive electrode plate and the negative electrode plate. The positive electrode plate, the separator, and the negative electrode plate are sequentially laminated or wound to form the battery cell. The negative electrode plate comprises a negative current collector and two negative active material layers coated on the front and back sides of the negative current collector. The positive electrode plate comprises a positive current collector and two positive active material layers coated on the front and back sides of the positive current collector. Either the positive electrode plate or the negative electrode plate further comprises a heat conducting and collecting body. The heat conducting and collecting body is a portion of the positive current collector not coated by the positive active material layer or a portion of the negative current collector not coated by the negative active material layer. At least two heat conducting and collecting bodies are stacked together to form at least one heat converging path, which is configured to transmit heat energy into or out of the battery cell. The heat converging path is stacked with or connected to a fluid-containing pipe. Heat energy of the electrode plates, which are the main heating portions of the battery, can quickly converge on the heat converging path through the heat conducting and collecting bodies, and then quickly exit out of the battery through the fluid-containing pipe arranged on the heat converging path, thus a high internal temperature of the battery can be avoided. When an internal temperature of the battery is too low, the heat converging path can also be heated through the fluid-containing pipe, a suitable working temperature of the electrode plates can be quickly achieved, thereby maintaining the battery in an optimal charge-discharge state, slowing down a fading capacity of the battery, and extending a service life of the battery. Also, by stacking the heat conducting and collecting bodies to form the heat converging path and heating/cooling the heat converging path, the internal temperature of the battery is increased/decreased, thereby always maintaining the internal temperature of the battery at a suitable working temperature, improving a working efficiency of the battery, extending a service life of the battery, and avoiding concomitant damage. An insulating member (not shown) is arranged on the heat converging path, thereby avoiding a short circuit of the battery and improving a safety performance of the battery. The heat conducting and collecting body can be integrally formed with the positive electrode plate, which simplifies the manufacturing process and increases the manufacturing efficiency.

In an alternative embodiment, the heat conducting and collecting bodies overlap with each other to form the heat converging path. The heat conducting and collecting bodies are connected by welding to form the heat converging path. That is, the heat conducting and collecting bodies can be connected together without any extra component. The welding can be ultrasonic welding, laser welding, or friction welding.

In an alternative embodiment, the heat conducting and collecting bodies can also be connected by bolting or riveting.

In an alternative embodiment, the heat conducting and collecting bodies are bent towards each other. Therefore, the heat absorbed by the heat conducting and collecting bodies is converged, which facilitates the dissipating of the heat from the battery and the heating of the battery. The heat conducting and collecting bodies after being bent can be inclined with the positive electrode plate or the negative electrode plate by an angle of 0 to 89 degrees.

In an alternative embodiment, the entirety of the heat conducting and collecting bodies can be bent toward a single direction, which facilitates the connection of the heat conducting and collecting bodies.

In an alternative embodiment, the heat conducting and collecting bodies are bent toward different directions.

In an alternative embodiment, a portion of the heat conducting and collecting bodies is bent toward a single direction or different directions, and is connected a remaining portion of the heat conducting and collecting bodies, the remaining portion of the heat conducting and collecting bodies is straight.

In an alternative embodiment, at least a portion of the heat conducting and collecting bodies defines a plurality of holes or a concave and convex surface.

In an alternative embodiment, the heat converging path carries a heat dissipation member. The heat dissipation member can be arranged between the heat conducting and collecting bodies. As such, the heat dissipation member quickly conducts the heat energy into or out of the heat converging path. The heat dissipation member can be multiple fins, a heat sink, or a metal sheet. The metal sheets quickly conduct the heat energy out of the heat converging path. The metal sheet and the heat conducting and collecting body can be made of a single material, which facilitates the connection between the metal sheet and the heat conducting and collecting body.

In an alternative embodiment, a heat exchange member is arranged on the heat converging path. The heat exchange member maintains the temperature of the heat converging path within a suitable range, thereby avoiding damage to the battery. The heat exchange member can be connected to the heat converging path by welding. That is, the heat converging path and the heat exchange member are connected together without any extra component, which also facilitates the connection.

In an alternative embodiment, the heat converging path and the heat exchange member are connected together by bolting, gluing, or riveting, which allows the connection to be stable.

In an alternative embodiment, the heat converging path is directly connected to the casing. The casing then serves as a heat sink to allow the heat energy on the heat converging path to be delivered to the casing.

In an alternative embodiment, an insulating layer is arranged on a surface of the heat conducting and collecting body or a surface of the heat converging path. As such, a short circuit in the battery and concomitant damage can be avoided.

In an alternative embodiment, the at least one heat converging path is arranged on an end of the heat conducting lithium-ion battery, the end of the heat conducting lithium-ion battery having a positive electrode tab, an end of the heat conducting lithium-ion battery opposite to the positive electrode tab, or a side of the heat conducting lithium-ion battery. The heat conducting and collecting bodies form a plurality of heat converging paths, at least one of the heat converging paths is arranged on the end of the heat conducting lithium-ion battery having the positive electrode tab.

In an alternative embodiment, the heat conducting and collecting body protrudes from the positive electrode plate, which facilitates the conduction and dissipation of the heat energy. The heat conducting and collecting body protruding from the positive electrode plate is further inserted into an electrolyte received in the casing. As such, the heat energy from the heat conducting and collecting body can be conducted into the electrolyte and further to the external surface of the battery. Therefore, heat energy is prevented from being accumulated in the battery due to poor heat conduction of the separator. Furthermore, the heat energy in the electrolyte can further quickly move to the positive and the negative electrode plates and, which prevents the temperature of the positive and the negative electrode plates and from being too low.

In an alternative embodiment, a heat exchange device is arranged in the electrolyte for heating or cooling the electrolyte. The electrolyte can in turn heat or cool the heat conducting and collecting bodies, thereby maintaining the temperature of the battery within a suitable range.

In an alternative embodiment, the heat conducting and collecting body is recessed with respect to the positive electrode plate, which saves internal space of the battery, and further increases the capacity of the battery for a given size of casing.

In an alternative embodiment, an interconnecting portion is formed between the heat conducting and collecting body and the positive electrode plate. A width of the heat conducting and collecting body is the same as a width of the interconnecting portion. As such, the heat conducting property of the heat conducting and collecting body is improved, and the manufacturing process is simplified.

In an alternative embodiment, the positive current collector not coated by the positive active material layer is parallel to the positive active material layer. The portion of the positive current collector not coated by the positive active material layer is on a central portion of the positive current collector.

In an alternative embodiment, a temperature sensor is arranged on the heat converging path, which can sense the temperature of the heat converging path. The temperature sensor can be a thin-film temperature sensor.

In an alternative embodiment, the positive active material of the positive active material layer is lithium iron phosphate, lithium cobalt oxide, lithium manganate, or a ternary material. The negative active material of the negative active material layers is carbon, tin-based negative material, or a transition metal nitride containing lithium or alloy.

### BRIEF DESCRIPTION OF THE DRAWINGS

FIG. 1 is a schematic view of a heat conducting lithium-ion battery in a first embodiment according to the present disclosure.
FIG. 2 is a cross-sectional view of FIG. 1.
FIG. 3 is a schematic view of a heat conducting lithium-ion battery in a third embodiment according to the present disclosure.
FIG. 4 is a cross-sectional view of FIG. 3.
FIG. 5 is a schematic view of a heat conducting lithium-ion battery in a fifth embodiment according to the present disclosure.
FIG. 6 is a schematic view of a heat conducting lithium-ion battery in a sixth embodiment according to the present disclosure.
FIG. 7 is a schematic view of a heat conducting lithium-ion battery in a seventh embodiment according to the present disclosure.
FIG. 8 is a schematic view of a heat conducting lithium-ion battery in an eighth embodiment according to the present disclosure.
FIG. 9 is a schematic view of a heat conducting lithium-ion battery in a ninth embodiment according to the present disclosure.
FIG. 10 is a cross-sectional view of FIG. 9.
FIG. 11 is a schematic view of a heat conducting lithium-ion battery in an eleventh embodiment according to the present disclosure.
FIG. 12 is a cross-sectional view of FIG. 11.
FIG. 13 is a schematic view of a heat conducting lithium-ion battery in a thirteenth embodiment according to the present disclosure.
FIG. 14 is a cross-sectional view of FIG. 13.
FIG. 15 is a schematic view of a heat conducting lithium-ion battery in a fifth embodiment according to the present disclosure.
FIG. 16 is a schematic view of a heat conducting lithium-ion battery in sixteenth embodiment according to the present disclosure.
FIG. 17 is a schematic view of a heat conducting lithium-ion battery in a seventeenth embodiment according to the present disclosure.

### DETAILED DESCRIPTION

Implementations of the disclosure will now be described, by way of embodiments only, with reference to the drawings.

A heat conducting lithium-ion battery comprising a casing 1, a battery cell 2, a positive electrode tab 3, and a negative electrode tab 4. The positive tab and the negative tab can be arranged on a same side or different sides of the battery cell. The casing encloses battery cell. The battery cell comprises a positive electrode plate, a negative electrode plate, and a separator spaced between the positive electrode plate and the negative electrode plate. The positive electrode plate, the separator, and the negative electrode plate are sequentially laminated or wound to form the battery cell. The negative electrode plate comprises a negative current collector and two negative active material layers coated on the front and back sides of the negative current collector. The positive electrode plate comprises a positive current collector and two positive active material layers coated on the front and back sides of the positive current collector. Either the positive electrode plate or the negative electrode plate further comprises a heat conducting and collecting body 5. The heat conducting and collecting body is a portion of the positive current collector not coated by the positive active material layer or a portion of the negative current collector not coated by the negative active material layer. At least two heat conducting and collecting bodies are stacked together to form at least one heat converging path 6, which is configured to transmit heat energy into or out of the battery cell. The heat converging path is stacked with or connected to a fluid-containing pipe.

Numeric 1 refers to a battery case, numeric 2 refers to a battery cell, numeric 4 refers to negative electrode tab, numeric 5 refers to a heat conducting and collecting body, numeric 6 refers to a heat converging path, numeric 7 refers to a fluid-containing pipe, numeric 8 refers to a heat exchange device, numeric 9 refers to an insulating layer.

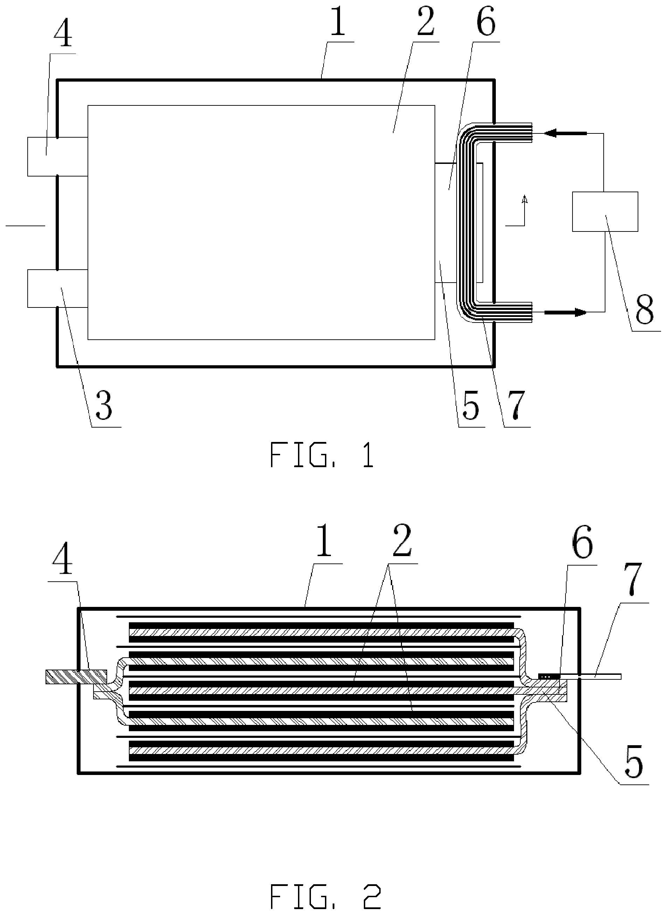

Referring to FIG. 1, the positive and negative electrode tabs are arranged on a same side, the heat conducting and collecting body and the fluid-containing pipe are both arranged on a side opposite to the electrode tabs and connected to the positive electrode tab. Referring to FIG. 2, the heat conducting and collecting body is connected to the positive electrode tab 3.

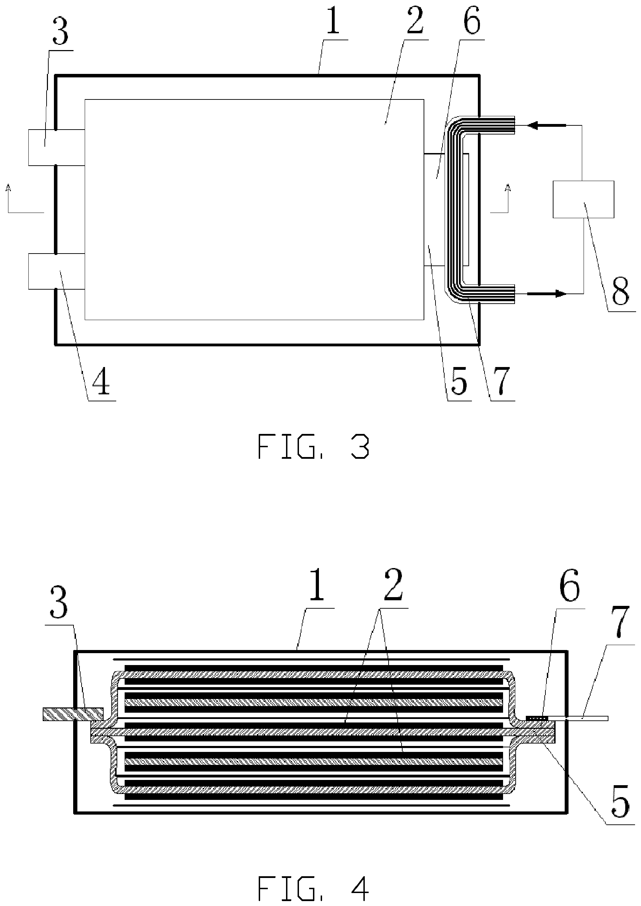

Referring to FIG. 3, the positive and negative electrode tabs are arranged on the same side, the heat conducting and collecting bodies and the fluid-containing pipe are arranged on an opposite side with respect to the electrode tabs and connected to the negative electrode tab. Referring to FIG.4, the heat conducting and collecting bodies are connected to the positive electrode tab 3.

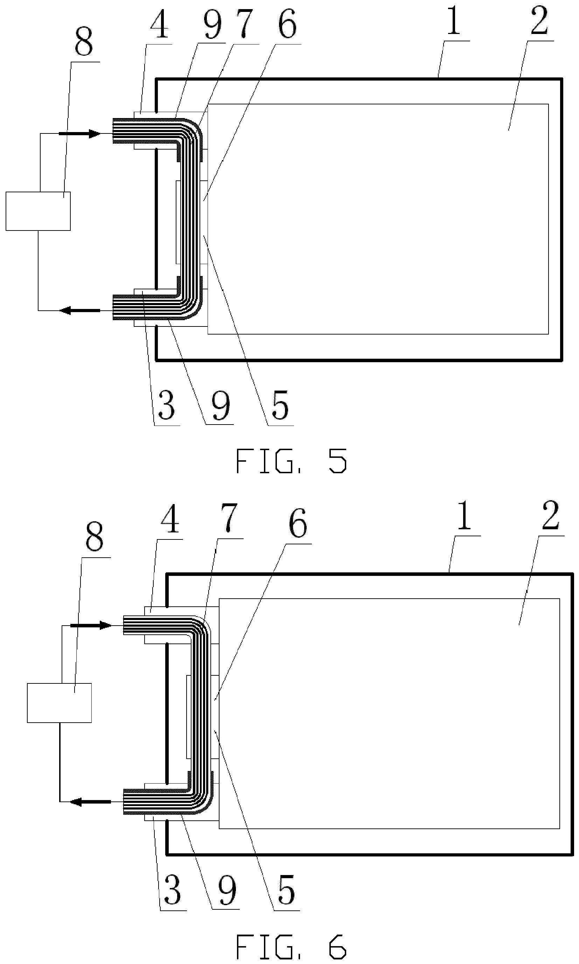

Referring to FIGS. 5, the heat conducting and collecting bodies and the positive and negative electrode tabs are arranged on the same side, the heat conducting and collecting bodies being arranged between the positive and negative electrode tabs. A fluid-containing pipe connected to the heat conducting and collecting bodies enters into the battery through a negative terminal post and leaves the battery through a positive terminal post. An inlet and an outlet of the fluid-containing pipe both carry an insulating layer which insulates the fluid-containing pipe from the positive and negative electrode tabs.

Referring to FIG. 6, the heat conducting and collecting bodies and the positive and negative electrode tabs are arranged on the same side, the heat conducting and collecting bodies being arranged between the positive electrode tab and the negative electrode tab. The fluid-containing pipe connected to the heat conducting and collecting bodies enters into the battery through a negative terminal post and leaves the battery through a positive terminal post. The outlet of the fluid-containing pipe carries the insulating layer which insulates the fluid-containing pipe from the electrode tabs.

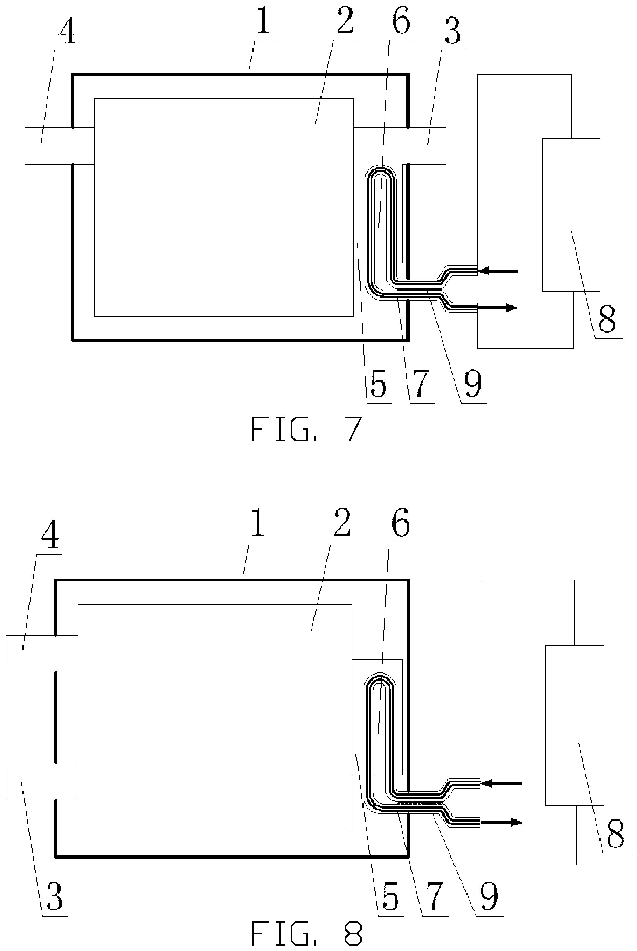

Referring to FIG. 7, the positive electrode tab and the negative electrode tab are arranged on opposite sides, the heat conducting and collecting bodies and the positive electrode tab are arranged on the same side. The heat conducting and collecting bodies are connected to the positive electrode tab. The fluid-containing pipe connected to the heat conducting and collecting bodies enters and leaves the battery through a single hole defined on the battery. The inlet and the outlet of the fluid-containing pipe both carry the insulating layer which insulates the fluid-containing pipe from the positive and negative electrode tabs and.

Referring to FIG. 8, the positive electrode tab and the negative electrode tab are arranged the same side, the heat conducting and collecting bodies and the positive and negative electrode tabs and are arranged on opposite sides. The heat conducting and collecting bodies are connected to the positive electrode tab. The fluid-containing pipe connected to the heat conducting and collecting bodies enters and leaves the battery through a single hole defined on the battery. The inlet and the outlet of the fluid-containing pipe both carry the insulating layer which insulates the fluid-containing pipe from the positive and negative electrode tabs and.

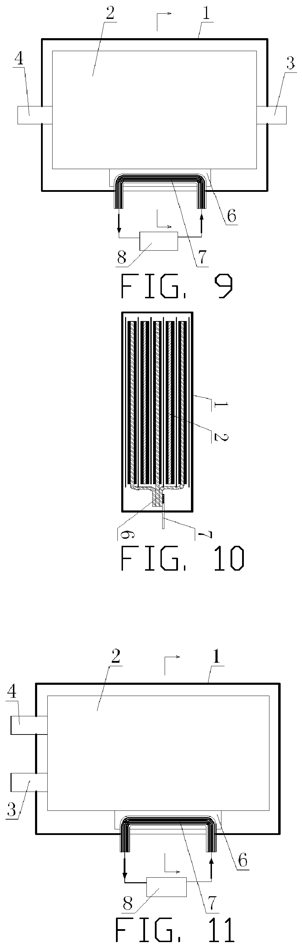

Referring to FIGS. 9 and 10, the positive electrode tab and the negative electrode tab are arranged on opposite sides, the heat conducting and collecting bodies and the positive and negative electrode tabs and are arranged on different sides. The fluid-containing pipe connected to the heat conducting and collecting bodies enters and leaves the battery from different holes defined on the battery.

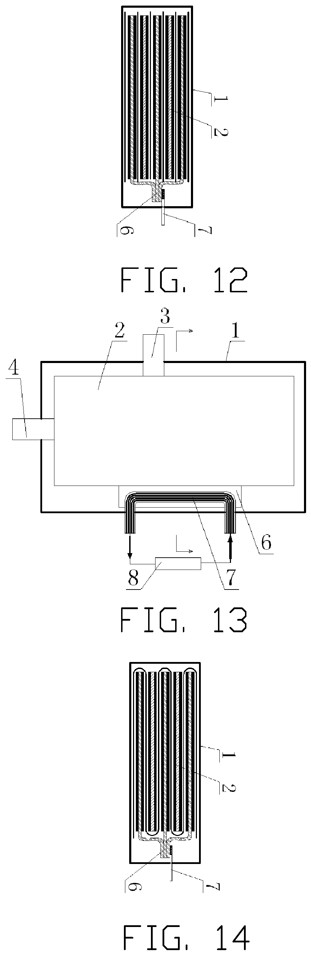

Referring to FIGS. 11 and 12, the positive electrode tab and the negative electrode tab are arranged on the same side, the heat conducting and collecting bodies and the positive and negative electrode tabs and are arranged on different sides. The fluid-containing pipe connected to the heat conducting and collecting bodies enters and leaves the battery through different holes defined on the battery.

Referring to FIGS. 13 and 14, the positive electrode tab and the negative electrode tab are arranged on adjacent sides, the heat conducting and collecting bodies and the positive electrode tab are arranged on opposite sides. The fluid-containing pipe connected to the heat conducting and collecting bodies enters and leaves the battery through different holes defined on the battery.

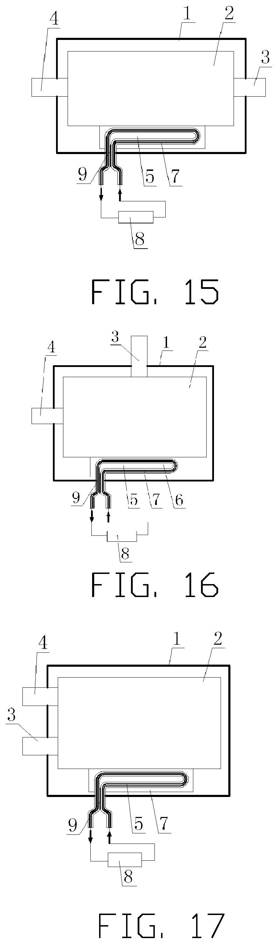

Referring to FIG. 15, the positive electrode tab and the negative electrode tab are arranged on the same side of the battery, the heat conducting and collecting bodies and the positive and negative electrode tabs and are arranged on different sides of the battery. The fluid-containing pipe connected to the heat conducting and collecting bodies enters and leaves the battery through a single hole defined on the battery. The insulating layer is arranged between the inlet and the outlet of the fluid-containing pipe.

Referring to FIG. 16, the positive electrode tab and the negative electrode tab are arranged on adjacent sides of the battery, the heat conducting and collecting bodies and the positive electrode tab are arranged on opposite sides of the battery. The fluid-containing pipe connected to the heat conducting and collecting bodies enters and leaves the battery through a single hole defined on the battery. The insulating layer is arranged between the inlet and the outlet of the fluid-containing pipe.

Referring to FIG. 17, the positive electrode tab and the negative electrode tab are arranged on the same side of the battery, the heat conducting and collecting bodies and the positive and negative electrode tabs and are arranged on different sides of the battery. The fluid-containing pipe connected to the heat conducting and collecting bodies enters and leaves the battery through a single hole defined on the battery. The insulating layer is arranged between the inlet and the outlet of the fluid-containing pipe.

Implementations of the above disclosure are described by way of embodiments only. It should be noted that devices and structures not described in detail are understood to be implemented by the general equipment and methods available in the art.

It is to be understood, even though information and advantages of the present embodiments have been set forth in the foregoing description, together with details of the structures and functions of the present embodiments, the disclosure is illustrative only; changes may be made in detail, especially in matters of shape, size, and arrangement of parts within the principles of the present embodiments to the full extent indicated by the plain meaning of the terms in which the appended claims are expressed.

## Claims

1. A heat conducting lithium-ion battery comprising:
a battery cell comprising a positive electrode plate, a negative electrode plate and a separator spaced between the positive electrode plate and the negative electrode plate, the positive electrode plate, the separator, and the negative electrode plate being sequentially laminated or wound to form the battery cell, the positive electrode plate comprising a positive current collector and a positive active material layer coated on the positive current collector, the negative electrode plate comprising a negative current collector and a negative active material layer coated on the negative current collector;
a casing enclosing the battery cell; and
positive and negative electrode tabs arranged on a same side or different sides of the battery cell;
wherein at least one of the positive electrode plate and the negative electrode plate comprises two heat conducting and collecting bodies, each of the heat conducting and collecting bodies is a portion of the positive current collector which is not coated by the positive active material layer or a portion of the negative current collector which is not coated by the negative active material layer, at least two heat conducting and collecting bodies are stacked together to form at least one heat converging path, which is configured to transmit heat energy into or out of the battery cell, a fluid-containing pipe is connected to the at least one heat converging path.

2. The heat conducting lithium-ion battery of claim 1, wherein the at least two heat conducting and collecting bodies overlap with each other to form the at least one heat converging path.

3. The heat conducting lithium-ion battery of claim 2, wherein the at least two heat conducting and collecting bodies are connected by welding, bolting or riveting.

4. The heat conducting lithium-ion battery of claim 3, wherein a method of the welding comprises ultrasonic welding, laser welding, and friction welding.

5. The heat conducting lithium-ion battery of claim 1, wherein the at least two heat conducting and collecting bodies are bent towards each other.

6. The heat conducting lithium-ion battery of claim 5, wherein the at least two heat conducting and collecting bodies is bent to be inclined with the positive electrode plate by an angle between 0 degree to 90 degrees.

7. The heat conducting lithium-ion battery of claim 5, wherein the at least two heat conducting and collecting bodies are bent towards different directions or a single direction.

8. The heat conducting lithium-ion battery of claim 1, wherein a portion of each of the at least two heat conducting and collecting bodies is bent towards a single direction or different directions, and is connected to a remaining portion of a corresponding one of the at least two heat conducting and collecting bodies by welding, the remaining portion of the heat conducting and collecting bodies is straight.

9. The heat conducting lithium-ion battery of claim 1, wherein at least a portion of the at least two heat conducting and collecting bodies defines a plurality of holes or a concave and convex surface.

10. The heat conducting lithium-ion battery of claim 1, wherein a heat dissipation member is arranged on a surface of each of the at least one heat converging path, arranged on a surface of each of the at least two heat conducting and collecting bodies, or arranged between the at least two heat conducting and collecting bodies.

11. The heat conducting lithium-ion battery of claim 10, wherein the heat dissipation member comprises fins, a heat sink, and a metal sheet, a material of the metal sheet is the same as a material of the heat conducting and collecting body.

12. The heat conducting lithium-ion battery of claim 1, wherein a heat exchange member is connected to the at least one heat converging path by welding, bolting, gluing, or riveting.

13. The heat conducting lithium-ion battery of claim 1, wherein an insulating layer is arranged on a surface of the heat conducting and collecting body or a surface each of the at least one heat converging path.

14. The heat conducting lithium-ion battery of claim 1, wherein the at least one heat converging path is arranged on an end of the heat conducting lithium-ion battery, the end of the heat conducting lithium-ion battery having a positive electrode tab, an end of the heat conducting lithium-ion battery opposite to the positive electrode tab, or a side of the heat conducting lithium-ion battery.

15. The heat conducting lithium-ion battery of claim 14, wherein the heat conducting and collecting bodies form a plurality of heat converging paths, at least one of the heat converging paths is arranged on the end of the heat conducting lithium-ion battery having the positive electrode tab.

16. The heat conducting lithium-ion battery of claim 1, wherein each of the at least two heat conducting and collecting bodies protrudes from the positive electrode plate, and a portion of each of the at least two heat conducting and collecting bodies which protrudes from the positive electrode plate is inserted into an electrolyte of the heat conducting lithium-ion battery, a heat exchange device is arranged in the electrolyte for heating or cooling the electrolyte.

17. The heat conducting lithium-ion battery of claim 1, wherein each of the at least two heat conducting and collecting bodies is recessed with respect to the positive electrode plate.

18. The heat conducting lithium-ion battery of claim 1, wherein an interconnecting portion is formed between the conducting and collecting body and the positive electrode plate, a width of the heat conducting and collecting body is the same as a width of the interconnecting portion.

19. The heat conducting lithium-ion battery of claim 1, wherein a temperature sensor is arranged on each of the at least one heat converging path.

20. The heat conducting lithium-ion battery of claim 1, wherein the heat conducting lithium-ion battery further comprising a casing directly connected to the at least one heat converging path, the casing is a heat sink for the positive electrode plate and the negative electrode plate.
